# EUROPEAN PATENT APPLICATION

(11) **EP 1 048 706 A1**
(43) Date of publication of application: **02.11.2000**
(21) Application number: 99201352.4
(22) Date of filing: 29.04.1999
(51) Int. Cl.: C09D 167/08, C09D 191/00

(54) **Coating composition comprising an oxidatively drying polyunsaturated condensation product, a polythiol, and a photoinitiator**

(71) Applicant: Akzo Nobel N.V., 6824 BM Arnhem (NL)
(72) Inventor: Bakkeren, Frank Johannes Alfred Dirk, 2171 KL Sassenheim (NL); Klaasen, Robert Paul, 1060 PW Amsterdam (NL); Lansbergen, Adrianus Jozefus Hendricus, 6862 WV Oosterbeek (NL)
(74) Representative: Schalkwijk, Pieter Cornelis

(57) **Abstract**

Coating composition comprising:
- c.: one or more thiol compounds;
- d.: one or more oxidatively drying polyunsaturated condensation products of one or more fatty acids and/or esters, one or more polyols and optionally one or more polycarboxylic acids and/or anhydrides of polycarboxylic acids and optionally other building blocks;
- d.: and one or more photo-initiators.
The ratio between the number of unsaturated groups and the number of SH-functional groups is preferably between 2:1 and 20:1. Preferably, the photoinitiator is a mono-, bis- or trisacyl phosphine oxide or a mixture thereof. The coating composition according to the invention can be used a one component coating system, preferably as a high solids coating composition, comprising 0 - 30 wt.% solvents, or as an aqueous coating composition.

## Description

The present invention relates to a coating composition comprising a polyunsaturated polymer, a thiol compound, and a photo-initiator.

US 3,729,404 discloses a composition comprising a polythiol, a polyene, and a photo-sensitizer. The photo-sensitizer is used in combination with a phosphine or phosphite compound. In this known composition, no oxidative drying takes place. The thiol compound serves as a cross linker. The specific polyenes as used in the examples in this publication have only two double bonds per chain, included by allylic groups. Such groups cause the formation of acrolein, which is a toxic compound. Since there are only two terminal unsaturated moieties per chain, such composition cures slowly and gives soft coating films. A similar composition is disclosed in US 4,078,118.

GB-A 2,189,499 discloses a coating composition comprising an unsaturated polyorganosiloxane, a thio-functional organosiloxane and a photo-initiator. Due to the large content of siloxane groups, recoatability and the pigments dispersibility are very poor.

The object of the invention is a coating composition according to the opening paragraph, which is free of the above mentioned drawbacks. Furthermore, the coating composition should show fast curing at low temperatures on the one hand and sufficiently long shelf life, especially for one-pot systems, on the other.

The object of the invention is achieved by a coating composition comprising:
a. one or more thiol compounds;
b. one or more oxidatively drying polyunsaturated condensation products of one or more fatty acids and/or esters, one or more polyols and optionally one or more polycarboxylic acids and/or anhydrides of polycarboxylic acids and optionally other building blocks; and
c. one or more photo-initiators.

It has surprisingly been found that the addition of thiol compounds to oxidatively drying polyunsaturated condensation products leads in the presence of a photo-initiator to much faster curing at low temperatures in comparison with the usual coating compositions comprising oxidatively drying polyunsaturated condensation products and dryers. Though the composition according to the invention shows fast curing, a good shelf-life is obtained, even in one-pot systems.

Preferably, the oxidatively drying polyunsaturated condensation products have more than five double and/or triple bonds.

The unsaturated groups in the oxidatively drying polyunsaturated condensation product are preferably introduced by the fatty acids, but may, alternatively or additionally, be introduced by one or more of the used polyols, carboxylic acids or anhydrides or other building blocks.

Suitable oxidatively drying polyunsaturated condensation products are alkyd resins. At least a part of the alkyd resin is oxidatively drying as a result of incorporating a large number of unsaturated, aliphatic compounds, at least a portion of which is polyunsaturated. The unsaturated aliphatic compounds preferably are unsaturated fatty acids, more particularly polyunsaturated fatty acids. Examples of mono-unsaturated fatty acids are myristoleic acid, palmitoleic acid, oleic acid, gadoleic acid, erucic acid, and ricinoleic acid and mixtures thereof. Examples of polyunsaturated fatty acids include linoleic fatty acid, linolenic fatty acid, elaeostearic fatty acid, licanic fatty acid, arachidonic fatty acid, clupoanodonic fatty acid, nisinic fatty acid, and mixtures thereof. Fatty acids containing conjugated double bonds, such as dehydrated Castor oil fatty acid, wood oil fatty acid and/or Calendula oil fatty acid can be used as well.

Examples of suitable divalent polyol compounds are ethylene glycol, 1,3-propane diol, 1,6-hexane diol, 1,12-dodecane diol, 3-methyl-1,5-pentane diol, 2,2,4-trimethyl-1,6-hexane diol, 2,2-dimethyl-1,3-propane diol, and 2-methyl-2-cyclohexyl-1,3-propane diol. Examples of suitable triols are glycerol, trimethylol ethane, and trimethylol propane. Suitable polyols having more than 3 hydroxyl groups are pentaerythritol, sorbitol, and etherification products of the compounds in question, such as ditrimethylol propane and di-, tri-, and tetrapentaerythritol. Preferably, use is made of compounds having 3-12 carbon atoms, e.g., glycerol, pentaerythritol and/or dipentaerythritol.

Alternatively or additionally polycarboxylic acids can be used as building blocks for the oxidatively drying polyunsaturated condensation products. Examples of suitable polycarboxylic acids include phthalic acid, citric acid, fumaric acid, mesaconic acid, maleic acid, citraconic acid, isophthalic acid, terephthalic acid, 5-tert. butyl isophthalic acid, trimellitic acid, pyromellitic acid, succinic acid, adipic acid, 2,2,4-trimethyl adipic acid, azelaic acid, sebacic acid, dimerised fatty acids, cyclopentane-1,2-dicarboxylic acid, cyclohexane-1,2-dicarboxylic acid, 4-methylcyclohexane-1,2-dicarboxylic acid, tetrahydrophthalic acid, endomethylene-cyclohexane-1,2-dicarboxylic acid, butane-1,2,3,4-tetracarboxylic acid, endoisopropylidene-cyclohexane-1,2-dicarboxylic acid, cyclohexane-1,2,4,5-tetracarboxylic acid, and butane-1,2,3,4-tetracarboxylic acid. If so desired, the carboxylic acids in question may be used as anhydrides or in the form of an ester, e.g., an ester of an alcohol having 1-4 carbon atoms.

Optionally, the oxidatively drying polyunsaturated condensation product may comprise other building blocks, that may for example be derived from monocarboxylic acids such as pivalic acid, 2-ethylhexanoic acid, lauric acid, palmitic acid, stearic acid, 4-tert.butyl-benzoic acid, cyclopentane carboxylic acid, naphthenic acid, cyclohexane carboxylic acid, 2,4-dimethyl benzoic acid, 2-methyl benzoic acid, benzoic acid, 2,2-dimethylol propionic acid, tetrahydrobenzoic acid, and hydrogenated or non-hydrogenated abietic acid or its isomer. If so desired, the monocarboxylic acids in question may be used wholly or in part as triglyceride, e.g., as vegetable oil, in the preparation of the alkyd resin. If so desired, mixtures of two or more of such monocarboxylic acids or triglycerides may be employed.

Optionally, isocyanates can also be used as a building block for the oxidatively drying polyunsaturated condensation product. Suitable isocyanates are for example diisocyanates, such as 1,6-hexane diisocyanate, isophorone diisocyanate, toluene diisocyanate, diphenyl diisocyanate and dicyclohexylmethane diisocyanate. Triisocyanates can also be used.

A specific example of a suitable alkyd is the condensation product of soya oil, phthalic anhydride, and pentaerythritol.

The alkyd resins can be obtained by direct esterification of the constituent components, with the option of a portion of these components having been converted already into ester diols or polyester diols. Alternatively, the unsaturated fatty acids can be added in the form of a drying oil, such as sunflower oil, linseed oil, tuna fish oil, dehydrated Castor oil, coconut oil, and dehydrated coconut oil. Transesterification with the polyols and, optionally, other building blocks will then give the final alkyd resin. This transesterification generally takes place at a temperature in the range of 115 to 250°C, optionally with solvents such as toluene and/or xylene also present. The reaction generally is carried out in the presence of a catalytic amount of a transesterification catalyst. Examples of transesterification catalysts suitable for use include acids such as p-toluene sulphonic acid, a basic compound such as an amine, or compounds such as calcium oxide, zinc oxide, tetraisopropyl orthotitanate, dibutyl tin oxide, and triphenyl benzyl phosphonium chloride.

Preferably, the coating composition comprises more than 70 wt.% of oxidatively drying polyunsaturated condensation products, related to the total weight of solid resin. The molecular weight of the oxidatively drying polyunsaturated condensation products may for instance be between 50 - 80.000, preferably between 500 - 10.000.

Examples of suitable thiol compounds include, but are not limited to, the esters of thioglycolic acid, 2-mercapto-propionic acid or 3-mercaptopropionic acid with polyols, such as glycols, pentaerythritol, di-pentaerythritol and trimethylolpropane, and optionally a fatty acid, such as oleic acid, stearic acid, isononanoic acid or sunflower fatty acid. Specific examples of suitable thiol compounds are ethylene glycol bis (thioglycolate), ethylene glycol bis (2-mercaptopropionate), ethylene glycol bis (3-mercaptopropionate), pentaerythritol tetrakis (thioglycolate), pentaerythritol tetrakis (2-mercapto propionate), pentaerythritol tetrakis (3-mercapto propionate), trimethylolpropane tris(2-mercaptopropionate), trimethylolpropane tris(3-mercaptopropionate) and the condensation product of di-trimethylolpropane, 2,2-dimethylolpropionic acid, stearic acid and 3-mercaptopropionic acid.

Preferably, the coating composition comprises 1 - 30 wt.% of thiol compounds, related to the total weight of solid resin, more preferably 3 - 20 wt.% of thiol compounds. The thiols may for example have a molecular weight of 50-20.000.

Alternatively, the oxidatively drying polyunsaturated condensation product and the thiol compound can be embodied in the same copolymer, if so desired.

The ratio between the number of unsaturated groups and the number of SH-functional groups in the coating composition is preferably at least 1,5:1. Best results are obtained if this ratio is between 2:1 and 20:1.

The photo-initiators suitable for use according to the invention generally are compounds activated by UV-radiation and/or daylight. Examples of suitable photoinitiators include e.g. ketones, such as methyl ethyl ketone, 2,3-butanedione, 1-hydroxy cyclohexyl phenyl ketone, 2-hydroxy-2-methyl-1-phenyl propan-1-one and aromatic ketones e.g. acetophenone, benzophenone, 4-aminobenzo-phenone, 4,4'-diaminobenzophenone, 4,4'-bis(dimethylamino) benzophenone, valero-phenone, hexanophenone, o-methoxybenzophenone, α-phenylbutyrophenone, γ-phenylbutyrophenone, p-morpholinopropiophenone, dibenzosuberone, 4-morpholinobenzophenone, 4-methoxyacetophenone, p-diacetylbenzene, 1,3,5-triacetylbenzene; benzoin compounds e.g. benzoin, benzoin methyl ether and benzoin ethyl ether, 4-morpholinodeoxybenzoin; quinone and anthrone compounds e.g. hydroquinone, anthraquinone, napthoquinone, acenaphthenequinone, and 3-methyl-1,3-diazo-1,9-benzanthrone; phenolic compounds e.g. 2,4-dinitrophenol; phosphine compounds such as triphenyl-phosphine and tri-o-tolyphosphine; azo compounds e.g. azobisisobutyronitrile; thioxanthone compounds including for example 2-isopropyl-thioxanthone, 1-chloro-4-propoxythioxanthone, 2,4-diethoxythioxanthone, and 2-chlorothioxanthone; and various other compounds e.g. benzil, benzaldehyde, 1-naphthaldehyde, α-tetralone, 2-acetylphenanthrene, 3-acetylphenanthrene, 9-acetyl-phenanthrene, 10-thioxanthenone, 3-acetylindole, 9-fluorenone, 1-indanone, 9-xanthenone, 9-thioxanthenone, 7-H-benz[de]anthracen-7-one, 1-acetonaphthone and 2-acetonaphthone. Mixtures of different photo-initiators may be used.

Preferably, the photoinitiator is a phosphine oxide compound, such as 2,4,6-trimethyl benzoyldiphenyl phosphine oxide (Lucirin^{®} TPO, available from BASF) or bis(2,6-dimethoxy-benzoyl)-2,4,4-trimethyl pentyl phosphine oxide (DMBAPO, Irgacure^{®} 403, available from Ciba Specialty Chemicals). Particularly preferable are acyl phosphine oxide compounds, such as mono-, bis- or trisacyl phosphine oxide or mixtures thereof. An example of bisacylphosphine oxide photo-initiators is bis(2,4,6-trimethylbenzoyl)-phenyl-phosphine oxide (Irgacure^{®} 819, available from Ciba Specialty Chemicals).

Preferably, the composition comprises 0,01 - 10 wt.% of a photo-initiator, more preferably 0,1 - 3 wt.%, based on total weight of solid resin.

The coating composition according to the invention may furthermore contain various additives such as UV stabilizers, cosolvents, dispersants, surfactants, inhibitors, fillers, anti-static agents, flame-retardant agents, lubricants, antifoaming agents, extenders, plasticizers, anti-oxidants, anti-freezing agents, waxes, thickeners, thixotropic agents, etc. The composition may be used as a clear varnish or may contain pigments. Examples of pigments suitable for use are metal oxides, such as titanium dioxide or iron oxide, or other inorganic or organic pigments.

Because of the drying characteristics of the coating composition according to the invention, no metal dryers, such as cobalt, are needed. However, such driers can be used additionally, if so desired.

The coating composition according to the present invention can be used as a high solids coating composition, comprising 0 - 40 wt.%, preferably 0 - 30 wt.% solvents. However, it is also suitable for conventional coating compositions with a higher solvents content. Alternatively, the composition can be used as an aqueous coating composition.

The coating composition according to the present invention can be applied by conventional methods, including brushing, roll coating, spray coating, or dipping.

The composition may be stored as a one component coating composition, preferably in a light proof container. Alternatively, the coating composition may be stored in two or more components, which are mixed before use.

The coating composition according to the invention is specifically suitable for use as a decorative or do-it-yourself coating, e.g. for wood substrates, such as door- or window frames, but can also be used in industry, in particular for wooden substrates. The coating composition may also be used for substrates made of metal, concrete, plastic materials or other materials.

The invention is further described and illustrated by the following examples. In these examples the compositions listed below are available as indicated.
- Irgacure^{®} 819: a bisacylphosphine oxide, commercially available from Ciba Specialty Chemicals;
- Nuodex Combi^{®} APB: a dryer comprising cobalt, zirconium and calcium, commercially available from Servo Delden BV, Delden, the Netherlands;
- Setal^{®} 270: a conventional alkyd resin based on soya bean oil, pentaerythritol and phthalic anhydride, having a solids content of about 70 % in white spirit, commercially available from Akzo Nobel Resins, Bergen op Zoom, the Netherlands;
- Setal^{®} 293: a solvent free alkyd resin, based on pentaerythritol and unsaturated fatty acids derived from sunflower oil. Commercially available from Akzo Nobel Resins, Bergen op Zoom, the Netherlands;
- Synolac^{®} 6094: a high solids alkyd resin, based on linoleic fatty acid, having a solids content of about 88 % in isoparaffinic solvent, commercially available from Cray Valley Ltd, United Kingdom.

In the examples, the following abbreviations are used:
- BAPO: bisacylphosphine oxide;
- PT3MP: pentaerythritol tetrakis (3-mercapto propionate), a thiol compound commercially available from Aldrich;
- PVC: pigment volume concentration.

In the following, weight percentages are based upon the total weight of the binder, consisting of the polycondensation products and the thiol compounds present in the composition concerned.

The drying time is measured as follows. The coating composition was applied with a draw bar on a glass plate. Curing took place at 10° C and 80% relative humidity in a climatized room under TL-055 light. Drying was tested by means of a BK Drying Recorder. The results obtained in this fashion can be classified as follows:
- Phase 1 :: the line traced by the pin closes up again ("open time").
- Phase 2 :: the pin traces a scratchy line ("dust free").
- Phase 3 :: the pin traces a straight line in the paint which does not close up again ("tack-free time").

### Examples 1 - 6, comparative examples A and B

In examples 1 - 6, coating compositions were prepared with contents of pentaerythritol tetrakis (3-mercaptopropionate) (PT3MP) increasing from 1 wt.% to 20 wt.%. Comparative examples A and B relate to a composition not comprising thiol compounds. In examples 1 - 6 and comparative example B, 0,5 wt.% of bisacylphosphine oxide (Irgacure^{®} 819) was used as the photo-initiator. The composition of comparative example A does not comprise photo-initiators, but comprises in stead thereof 7,5 wt.% relative to the total weight of the binder, of Nuodex Combi^{®} APB, which is a dryer comprising cobalt, zirconium and calcium. Based on the content of pentaerythritol tetrakis (3-mercaptopropionate) and the alkyd content in comparative example A, the composition comprises 0.06 wt.% cobalt, 0.38 wt.% zirconium, 0.23 wt.% calcium. Furthermore, it comprises an anti-skinning agent giving 0.54 wt.% 2-butanone oxim.

The compositions of examples 1 - 6 and of comparative examples A and B all comprise a high solid alkyd based upon sunflower fatty acid, with oil content of 74 % and solids content of 90 wt.% in white spirit with viscosity of 6,3 Pa.s at 23° C. All compositions comprise a pigment volume concentration (PVC) of 15 %.

Results of the drying tests with the BK Drying Recorder are given in the following table 1.

**Table 1**

| *Variation of amount of thiol resin.* | | | | |
|---|---|---|---|---|
| | Composition | Phase 1 (hours) | Phase 2 (hours) | Phase 3 (hours) |
| Example 1 | 1 wt.% PT3MP, 0.5 wt.% BAPO | 1,9 | 4 | 10,2 |
| Example 2 | 3 wt.% PT3MP, 0.5 wt.% BAPO | 0,8 | 1,4 | 3,9 |
| Example 3 | 5 wt.% PT3MP, 0.5 wt.% BAPO | 0,7 | 1,2 | 2,4 |
| Example 4 | 10 wt.% PT3MP, 0.5 wt.% BAPO | 0,7 | 1,1 | 1,9 |
| Example 5 | 15 wt.% PT3MP, 0.5 wt.% BAPO | 0,7 | 1,1 | 1,9 |
| Example 6 | 20 wt.% PT3MP, 0.5 wt.% BAPO | 0,6 | 1 | 2 |
| Comparative example A | 0% PT3MP | 2,6 | 3,5 | 4,7 |
| | Metal driers: Co, Ca, Zr | | | |
| Comparative example B | 0% PT3MP | 4,4 | 7,1 | 12,8 |
| | 0.5 wt.% BAPO | | | |

As can be seen in table 1, variation of the amount of thiol resin revealed a decrease of drying times with increasing thiol concentration. The composition of comparative example B, which did not contain a thiol resin, resulted in long drying times, whereas only 1 wt.% of pentaerythritol tetrakis (3-mercapto propionate) led to a substantial increase of the drying speed. With 3 wt.% of pentaerythritol tetrakis (3-mercapto propionate) faster curing was obtained than with the system using conventional metal dryers as tested in comparative example A.

### Examples 7 - 11

In examples 7 - 11 coating compositions were prepared comprising the same compounds as the compositions of example 3. The compositions of examples 7 - 11 all comprise pentaerythritol tetrakis (3-mercapto propionate) in an amount of 5 wt.% based on the total weight of the thiol and alkyd compounds. The content of bisacylphosphine oxide was varied. Same curing tests were carried out as in examples 1 - 6. The results are given in table 2, which gives the amount of bisacylphosphine oxide in weight percentage based on the total weight of alkyd and thiol compounds.

**Table 2:**

| *Variation of amount of photo-initiator* | | | | |
|---|---|---|---|---|
| | BAPO content | Phase 1 | Phase 2 | Phase 3 |
| Example 7 | 0,25 wt.% BAPO | 1 | 2,2 | 5,9 |
| Example 8 | 0,5 wt.% BAPO | 0,7 | 1,3 | 2,6 |
| Example 9 | 1,0 wt.% BAPO | 0,5 | 0,9 | 1,7 |
| Example 10 | 2,0 wt.% BAPO | 0,3 | 0,6 | 0,8 |
| Example 11 | 3,0 wt.% BAPO | 0,3 | 0,8 | 4,6 |

As shown by table 2, increasing the amount of photoinitiator up to 2 wt.% led to a decrease of drying times. However, further increasing the amount of bisacylphosphine oxide to 3.0 wt.% did not improve the reaction speed any further.

Example 8 is similar to example 3. Though the results are slightly different, these differences are not significant.

### Examples 12 - 14

For examples 12 - 14, a white pigmented formulation, with a PVC of 15%, was prepared comprising 1.0 wt.% of irgacure^{®} 819, a thiol compound and a high solid alkyd prepared from sunflower fatty acid, with oil content of 74% and solids content of 90% in white spirit with a viscosity of 6,3 Pa.s at 23° C.

In example 12, the thiol compound was formed by 17 wt.% on total binder of the condensation product of di-trimethylolpropane, 2,2-dimethylolpropionic acid, stearic acid and 3-mercaptopropionic acid. This product was made in the following way: 118,6 g di(trimethylolpropane) and 508,2 g of 2,2-dimethylolpropionic acid were charged in a reaction flask equipped with stirrer, nitrogen inlet, thermo couple, Vigreux^{®} cooler and Dean-Stark^{®} apparatus. The mixture was esterified at 140°C using 14,4 g of para-toluene sulphonic acid as a catalyst. When water distillation ceased, vacuum was applied for removal of water. After reaching an acid value below 10, 698,4 g stearic acid was added while keeping the temperature of the mixture above 110° C. Then 5 wt.% of xylene was added and 289 g 3-mercaptopropionic acid was dosed during one hour, while the temperature was raised from 120° C to 140° C. Another 5 wt.% of xylene was added and the mixture was cooked using reflux at lowered pressure. After some hours, another 7.2 g of paratoluene-sulphonic acid was added, and the mixture was cooked until an acid value below 10 was reached. Then 4,6 g lithium carbonate and, after stirring for 30 minutes, 233 g white spirit were added. The resin was cooled and filtered with a pressure filter using a Clarcel^{®} filter aid, available from Elf Atochem. The resulting resin had a solids content of 85,6 wt.% and an acid value of 8,4 mg KOH/g on solids. Viscosity was measured at 23°C and was 1,42 Pa.s.

In example 13, the composition comprised as the thiol compound 15 wt.% of the condensation product of dipentaerythritol, oleic acid and 3-mercaptopropionic acid.

In example 14, the thiol compound was formed by the condensation product of di-trimethylolpropane, 2,2-dimethylolpropionic acid, isononanoic acid and 3-mercaptopropionic acid.

In the examples 12 - 14, the SH-functionality was calculated to be about 4. The number of thiol functional groups, about 10 eq.%, was equivalent with the number of thiol functional groups in the composition of example 9, which also had a calculated SH-functionality of about 4. BK-drying test results, here also obtained at 10° C, are given in table 3.

**Table 3:**

| *Variation of type of thiol compound.* | | | | |
|---|---|---|---|---|
| | Thiol content | Phase 1 (hours) | Phase 2 (hours) | Phase 3 (hours) |
| Example 9 | 5 wt.% PT3MP | 0,5 | 0,9 | 1,7 |
| Example 12 | 17 wt.% thiol of example 12 | 0,3 | 0,5 | 0,8 |
| Example 13 | 15 wt.% thiol of example 13 | 0,5 | 1,0 | 1,8 |
| Example 14 | 17.5 wt.% thiol of example 14 | 0,5 | 1,5 | 2,3 |

### Example 15, Comparative Examples C and D

For example 15, the same thiol compound was formed as in example 12. This thiol compound was used to formulate a clear coat without pigment. The clear coat consisted of 14 wt.% of the thiol compound and 86 wt.% of Setal^{®} 270, a conventional alkyd commercially available from Akzo Nobel Resins and 1.0 wt.% of Irgacure^{®} 819 (bisacylphosphine oxide) on total binder.

In Comparative Examples C and D, a clear coat composition was prepared that did not comprise a thiol compound. The binder consisted of 100 wt.% Setal^{®} 270. In Comparative Example C metal dryers were used in stead of a photoinitiator. The used metal dryer was 7,5 wt.% of Nuodex Combi^{®} APB, resulting in the presence of 0,06 wt.% cobalt, 0,38 wt.% zirconium and 0,23 wt.% calcium, all percentages by total weight of the binder. The composition of Comparative Example D did not contain metal dryers, but did contain 1 wt.% of Irgacure^{®} 819 (bisacylphosphine oxide).

Drying of the compositions of example 15 and of comparative examples C and D was tested as set out above. Results are shown in Table 4.

**Table 4**

| | Composition | Phase 1 (hours) | Phase 2 (hours) | Phase 3 (hours) |
|---|---|---|---|---|
| Example 15 | 14 wt.% thiol compound 86 wt.% Setal^{®} 270, 1 wt.% BAPO | 0,9 | 1,0 | 2,1 |
| Comparative example C | 100 wt.% Setal^{®} 270, Nuodex Combi^{®} APB | 1,4 | 2,0 | 5,0 |
| Comparative example D | 100 wt.% Setal^{®} 270, 1 wt.% BAPO | 1,0 | 2,3 | 4,2 |

### Examples 16 and 17, Comparative Examples E - H

The thiol compound as prepared in example 15, was used to prepare clear coat compositions for examples 16 and 17. In example 16, the clear coat composition comprised 14 wt.% of the thiol compound and 86 wt.% of Setal^{®} 293, a high solids alkyd resin. In example 17, the clear coat composition comprised 14 wt.% of the thiol compound and 86 wt.% of Synolac^{®} 6094, also a high solids alkyd resin.

Comparative examples E and F were carried out with clear coat compositions comprising 100 wt.% Setal^{®} 293. The clear coat compositions of comparative examples G and H comprised 100 wt.% Synolac^{®} 6094. In comparative examples E and G, 7,5 wt.% Nuodex Combi^{®} APB was used in stead of a photo-initiator. In comparative examples F and H, in which no metal dryers were used, the clear coat compositions comprised 1 wt.% of Irgacure^{®} 819 (bisacylphosphine oxide).

Results of drying tests, carried out as set out above, are given in Table 5.

**Table 5**

| | Composition | Phase 1 (hours) | Phase 2 (hours) | Phase 3 (hours) |
|---|---|---|---|---|
| Example 16 | 14 wt.% thiol compound of example 15 | 0 | 2,0 | 3,4 |
| | 86 wt.% Setal^{®} 293, 1-wt.% BAPO | | | |
| Comparative Example E | 100 wt.% Setal^{®} 293, Nuodex Combi^{®} APB | 3,5 | 4,3 | 7,4 |
| Comparative Example F | 100 wt.% Setal^{®} 293, 1 wt.% BAPO | 6,3 | 8,2 | 13,5 |
| Example 17 | 14 wt.% thiol compound of example 15 | 0 | 0,4 | 1,2 |
| | 86 wt.% Synolac^{®} 6094, 1 wt.% BAPO | | | |
| Comparative Example G | 100 wt.% Synolac^{®} 6094, Nuodex Combi^{®} APB | 4,1 | 4,6 | 5,5 |
| Comparative Example H | 100 wt.% Synolac^{®} 6094, 1 wt.% BAPO | 5,0 | 6,3 | 11,7 |

## Claims

1. Coating composition comprising:
a. one or more thiol compounds;
b. one or more oxidatively drying polyunsaturated condensation products of one or more fatty acids and/or esters, one or more polyols and optionally one or more polycarboxylic acids and/or anhydrides of polycarboxylic acids and optionally other building blocks;
c. and one or more photo-initiators.

2. Coating composition according to claim 1 characterized in that in the ratio between the number of unsaturated groups and the number of SH-functional groups is at least 1,5:1, preferably between 2:1 and 20:1.

3. Coating composition according to one of the preceding claims characterized in that the coating composition comprises 1 - 30 wt.%, preferably 3 - 20 wt.%, of thiol compounds, related to the total weight of solid resin.

4. Coating composition according to one of the preceding claims characterized in that one or more isocyanates are used as building blocks for the oxidatively drying polyunsaturated condensation products.

5. Coating composition according to one of the preceding claims characterized in that the coating composition is a high solids coating composition, comprising 0 - 40 wt.%, preferably 0 - 30 wt.% solvents.

6. Coating composition according to one of claims 1 - 4 characterized in that the composition is an aqueous coating composition.

7. Coating composition according to one of the preceding claims characterized in that the photoinitiator is active by visible light.

8. Coating composition according to one of the preceding claims characterized in that the photoinitiator is an acyl phosphine oxide compound, preferably mono-, bis- or trisacyl phosphine oxide or a mixture thereof.

9. Use of a coating composition according to one of claims 1 - 8 as a one component coating system.
